# EUROPEAN PATENT APPLICATION

(11) **EP 1 122 384 A1**
(43) Date of publication of application: **08.08.2001**
(21) Application number: 00112573.1
(22) Date of filing: 14.06.2000
(51) Int. Cl.: E04H 17/14, F16B 21/16

(54) **Fasteners for friezes of railings, gratings and the like**

(30) Priority: 01.02.2000 IT CO200004
(71) Applicant: STAMPERBA S.n.c. dei F. lli RADAELLI ANDREA, GIORGIO, PATRIZIA, ALBERTO, 22036 Erba (Como) (IT)
(72) Inventor: Radaelli, Andrea, 22036 Erba (Como) (IT); Radaelli, Giorgio, 22036 Erba (Como) (IT); Radaelli, Patrizia, 22036 Erba (Como) (IT); Radaelli, Alberto, 22036 Erba (Como) (IT)
(74) Representative: Lecce, Giovanni

(57) **Abstract**

Fasteners for friezes (7, 9) of railings, gratings and the like are constituted of annular bodies from elastic material, integral (1) or sectional (1'), on whose external (5) and internal (2, 3) surfaces parallel protrusions (10, 10') are present, which are sequentially arranged in the form of annular saw-tooth indentations that are inclined, the external ones (10) in a direction, the internal ones (10') in the opposite direction with respect to the symmetry axis (11) of said annular bodies. They are pressure-interposed between the peripheral surfaces of holes (6 and/or 8) of friezes, and the external surfaces of the coupling standards (4), with the indentations (10, 10'), oriented in such a way as to facilitate the pressure-coupling and to prevent the subsequent detachment attempts.

## Description

The present industrial invention relates to fasteners for friezes of railings, gratings and the like, that are substantially constituted of annular bodies from elastic materials, either integral or sectional, on whose external and internal surfaces parallel protrusions are present, which are sequentially arranged in the form of annular saw-tooth indentations that are inclined, the external ones in a direction, the internal ones in the opposite direction with respect to the symmetry axis of said annular bodies.

Fasteners also already known which are substantially constituted of metal annular elements which are interposed between the coupling standards and the lance-studs and/or the sleeve-studs or the like. From the side of their external periphery, said annular elements engage and couple with corresponding cavities obtained on the end of said studs and, in the central part, they comprise a through-hole whose section corresponds to the transversal one of the standards to which they are to be associated. The metal annular elements are pressed into the corresponding cavities, after which the studs are positioned on the standards and fixed with welding stitches.

Said devices, while being better, more rational and more economical compared to the traditional systems that need interventions of total peripheral welding of the edges to seal the spans due to diversities in the shape of the through-holes of the studs and the sections of the standards, especially in the presence of square section standards, have anyhow some drawbacks and/or limitations. In particular, the adoption of the metal annular elements requires the realization of special seats on the studs, the forced assembly on each other, and the constraint of the positioning of the standards with welding stitches. Another drawback lies in that such operations must be carried out by specialized personnel provided with apparatuses such as welding machines, burring machines, and the like, and not by hobby-lovers and/or do-it-yourself doers.

Object of the present invention is to eliminate the above drawbacks. The invention, as is characterized by the claims, solves the problem by means of fasteners for friezes of railings, gratings and the like, by means of which the following results are achieved: the annular fastener bodies are realizable by molding elastic material, such as plastic material in general, possibly pigmented according to the natural color of the metals adopted for the forming of the studs and standards for railings, gratings and the like; their application on the standards and/or the holes of the studs is direct and does not require any external preparation intervention; the annular bodies are realizable in one only piece or with modular sectors, to allow their application in any coupling conditions between studs and standards.

The advantages achieved by means of the present invention lie essentially in that the annular bodies, either integral or sectional, are already prefabricated and can be directly utilized on site on the details to be mutually coupled and fastened, without having to carry out any preliminary adaptation operation; the elasticity of the material from which the annular bodies are made, allows an easy, rapid and economical application; the bodies are pressure-inserted in interposed position between the peripheral surfaces of the holes of the friezes or sleeve-studs and/or lance-studs and the like, and the external surfaces of the coupling standards, with the inclined indentations oriented in such a way as to facilitate the introduction, during the coupling of the parts, and to contrast and hinder the possible detachment attempts of the same; the coaxial configuration of the external perimeter and the central hole, provided with the coupling indentations, ensures the coaxial alignment of the friezes with the standards.

The invention will be described with more details hereunder; according to embodiments reported only by way of non-limiting example, with reference to the attached drawings, wherein:

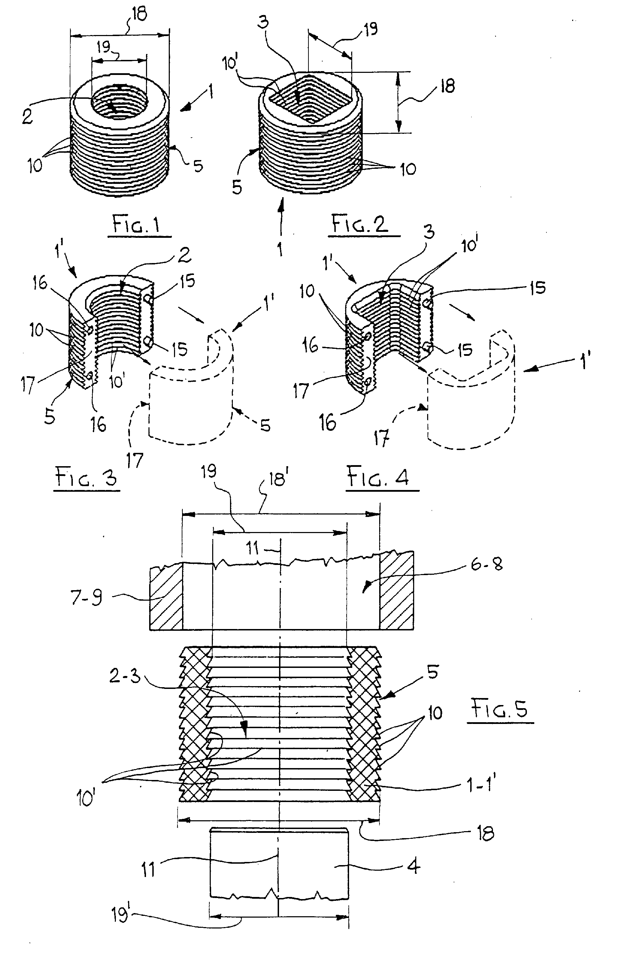

Figure 1 shows the perspective view of an elastic body having an external cylindrical shape and a central cylindrical hole;
Figure 2 shows the perspective view of an elastic body having an external cylindrical shape and a central quadrangular hole;
Figure 3 shows the perspective view of an elastic semi-sector having an external cylindrical shape and a central cylindrical hole;

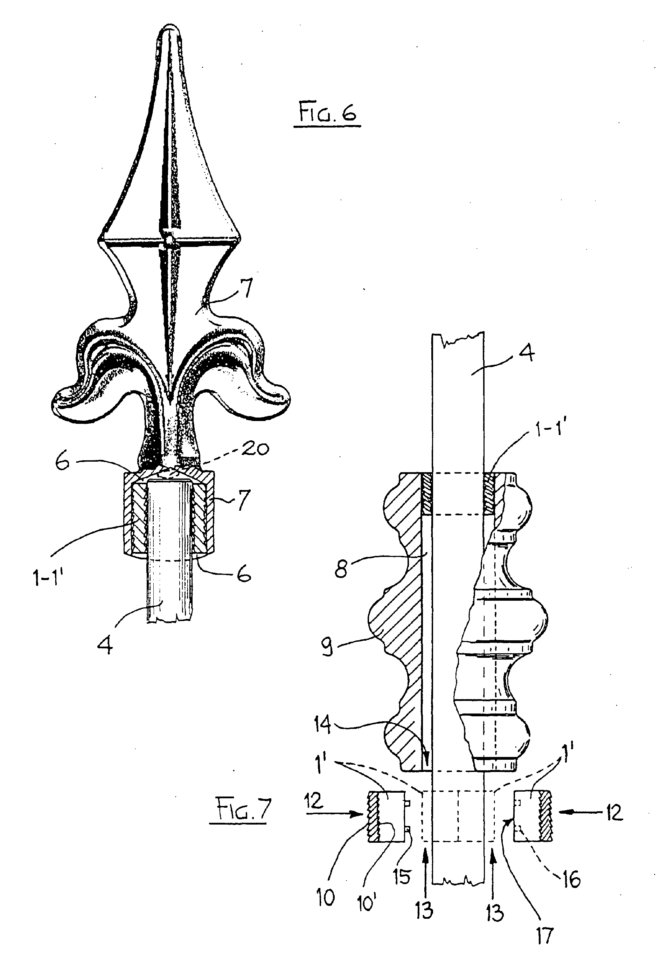

Figure 4 shows the perspective view of an elastic semi-sector having an external cylindrical shape and a central quadrangular hole;
Figure 5 shows a magnified partial cross-section of a coupling according to the invention, stressing the arrangement of the indentations and their retention manner with respect to the walls of the associated components;
Figure 6 shows the partly sectioned view of a lance-stud with a dead hole, engaged on a standard by means of the adoption of fastening means according to the invention; and
Figure 7 shows the partly sectioned view of a sleeve-stud with a through-hole, engaged on a standard by means of the adoption of fastening means according to the invention.

The figures refer to fasteners for friezes of railings, gratings and the like, which are substantially constituted of annular bodies from elastic material. They can be realized either according to an integral (1) or a sectional form (1'). The central through-hole of the annular bodies may be circular (2), quadrangular (3) or in any case polygonal, depending on the section type of the standards (4) on which said bodies are to be coupled.

The external configuration (5) is, instead, substantially cylindrical, according to the corresponding usual configuration of the dead holes (6) obtained on the lance-studs (7) or to the corresponding end stud of standards (4), and the through-holes (8) obtained on the sleeve-studs (9) for intermediate applications on said standards.

However, it is not excluded the possibility that also the external surfaces of the elastic annular bodies (1, 1') might have polygonal configurations, in case of coupling with corresponding polygonal dead-holes or through-holes obtained on said studs.

In any case, on the external (5) and internal (2, 3) surfaces of the annular bodies (1, 1') parallel protrusions (10, 10') are always present, which are sequentially arranged in the form of annular saw-tooth indentations that are inclined, the external ones (10) in a direction, the internal ones (10') in the opposite direction with respect to the symmetry axis (11) of said annular bodies.

The annular elastic sectional bodies (1') are so constituted as to be radially modular with each other to form in any case complete annular bodies corresponding to the integral ones (1) and to realize identical couplings between said studs (7, 9) and said standards (4). Their use is therefore corresponding to the one of the integral bodies; besides, they have the advantage of being easily realizable by molding, without the need of more complex molds with undercuts or mobile carriages, and being adoptable also in case of difficulty of axial insertion in the standards. In this case, the elastic annular bodies may be composed around the standards (4), approaching and radially coupling sectors (1') according to the arrows (12) of Figure 7, and subsequent forced introduction, according to the direction of arrows (13) in interspace (14) constituted by the coupling of a standard (4) with any type of decorative stud (7, 9). The radial composition of the sectors is facilitated and ensured by means of the coupling of integral pins (15) with corresponding seats (16), present on the complementary faces (17) of the sectors. Preferably, the annular bodies (1') are realized as two half-sectors diametrically modular; however, the possibility of a different subdivision is not excluded.

Besides the coupling between pins (15) and seats (16), faces (17) of the sectors can be tied also by adequate glues.

The annular bodies (1, 1') are realized from elastic material, such as for instance plastic material in general, and the like, possibly pigmented according to the natural color of the metals adopted for the forming of the studs and the standards for railings and gratings; the elasticity of the material adopted has the function of facilitating the forced pressure-insertion of bodies (1, 1') in the respective seats (6, 8) and of creating the resistance necessary to prevent the possible subsequent extraction attempts. For this reason, the maximum top level of the parallel saw-teeth protrusions (10) of the external configuration (5) is complementary to the coupling level (18') with the dead holes (6) or through-holes (8) of studs (7, 9), or the like, and the minimum top level of the saw-teeth parallel protrusions (10') of the central through-holes (2, 3) is complementary to the coupling level (19') with standards (4), unless an interference is provided depending of the elasticity of the materials which the annular bodies (1, 1') are made from.

The annular bodies (1 and/or 1') are pressure-forced in said holes (6 and/or 8) of studs (7 and/or 9), through the engagement of their external surfaces (5) orienting towards said holes the inclined part of the annular indentations (10) so as to create a stress raiser for their introduction and to facilitate their elastic peripheral deformation. Once the introduction has been completed, the annular indentations tend to elastically recovering their original conformation, expanding as much as possible against the walls of said holes and engaging with the same, while the respective peripheral ends are so oriented as to contrast and hinder any subsequent extraction attempt.

Afterwards, and in the same manner, standards (4) are pressure-forced into the central holes (2 and/or 3) of said annular bodies (1 and/or 1') engaged in holes (6 and/or 8) of studs (7 and/or 9). Also this introduction is facilitated by the orientation of the internal annular indentations (10') contrary to the one of the external annular indentations (10). In this way also the annular indentations (10') create a stress raiser for the introduction of the standards, deforming elastically. At the end, the indentations recover elastically their original conformation, expanding as much as possible against the walls of said holes and engaging with the same, while the respective peripheral ends are also so oriented as to contrast and hinder any subsequent extraction attempts.

The pressure-forced couplings, carried out in the described manner, perfectly fixed and coaxially aligned, are of easy and rapid realization, require elementary tools, such as middle weight hammers or uphand hammers, and may be realized with excellent results also by non specialized personnel or by "do-it-yourself'-doers.

Possible additional locks for consolidating the lance-studs or end studs with dead-holes (6) can be obtained by placing on the tops of the standards (4) capsules (20) containing fluid glue, such as for instance cyanoacrylic glue or the like. At the end of the introduction in holes (2, 3) of the elastic bodies (1, 1'), said standards (4) crash said capsules (20) breaking them. The fluid glue that comes out spreads on the material constituting standards (4), studs (7), elastic bodies (1, 1'), and infiltrates through indentations (10, 10'), achieving a total adhesion between the parties. A like glue, caused to drip on the elastic bodies (1, 1') inserted in holes (8) of sleeve-stud (9), produces the same adhesion between said parts.

While the present invention has been described and illustrated according to embodiments solely reported by way of non limiting example, it will be obvious to those skilled in the art that various changes may be made in the forms, structure, details, orientations, without for this falling outside its protection scope.

## Claims

1. Fasteners for friezes of railings, gratings and the like, characterized in that they are constituted of annular bodies from elastic material on whose external (5) and internal (2, 3) surfaces parallel protrusions (10, 10') are present, which are sequentially arranged in the form of annular saw-tooth indentations (10, 10') that are inclined, the external ones (10) in a direction, the internal ones (10') in the opposite direction with respect to the symmetry axis (11) of said annular bodies.

2. The fasteners for friezes of railings, gratings and the like according to claim 1, characterized in that the annular bodies (1) from elastic material are integral and comprise external (5) and internal (2, 3) surfaces provided with parallel protrusions, which are sequentially arranged in the form of annular saw-tooth indentations (10, 10') that are inclined, the external ones (10) in a direction, the internal ones (10') in the opposite direction with respect to the symmetry axis (11) of said annular bodies.

3. The fasteners for friezes of railings, gratings and the like according to claim 1, characterized in that the annular bodies (1') from elastic material are sectional and radially modular to form complete annular bodies, corresponding to the integral ones (1).

4. The fasteners for friezes of railings, gratings and the like according to claims 1 and 3, characterized in that the annular bodies (1') from elastic material, sectional and radially modular to form complete annular bodies, corresponding to the integral ones (1), are provided with mutual engagement means obtained on the complementary coupling faces (17); said means being integral pins (15) modular with seats (16).

5. The fasteners for friezes of railings, gratings and the like according to claims 1, 3 and 4, characterized in that the annular bodies (1') from elastic material are constituted by two diametrically modular half-sectors to form complete annular bodies, corresponding to the integral ones (1) and are provided with mutual engagement means obtained on the complementary coupling faces (17); said means being integral pins (15) modular with seats (16).

6. The fasteners for friezes of railings, gratings and the like according to claims 1-5, characterized in that the through-hole of the annular bodies (1, 1') is circular (2), quadrangular (3) or in any case polygonal, depending on the type of section of standards (4) whereon said bodies are modular.

7. The fasteners for friezes of railings, gratings and the like according to claims 1-6, characterized in that the external configuration of the elastic annular bodies (1, 1') is cylindrical and corresponds to the standard configuration of the dead-holes (6), obtained on the lance-studs or end studs (7) of standard (4), and the through-holes (8) obtained on the sleeve-studs (9) for intermediate applications on said standards.

8. The fasteners for friezes of railings, gratings and the like according to claims 1-6, characterized in that the external configuration of the elastic annular bodies (1, 1') is polygonal to couple with corresponding polygonal, dead or through holes obtained on said studs (7, 9).

9. The fasteners for friezes of railings, gratings and the like according to claims 1-8, characterized in that the annular bodies (1, 1') have the maximum top level (18) of the saw-tooth parallel protrusions (10) of the external configuration (5), complementary to the coupling level (18') with the dead (6) or through (8) holes of studs (7, 9) or the like, and have the maximum top level (19) of the saw-tooth parallel protrusions (10'), of the central through-holes (2, 3) complementary to the coupling level (19') with standard (4), unless an interference is provided depending of the elasticity of the materials which the annular bodies are made from.

10. The fasteners for friezes of railings, gratings and the like according to claims 1-9, characterized in that the annular bodies (1 and/or 1') are made from elastic material, such as a plastic material in general, an the like, either pigmented or not pigmented, according to the natural color of the metals adopted for forming studs (7, 9) and standards (4).

11. The fasteners for friezes of railings, gratings and the like according to claims 1-9, characterized in that the annular bodies (1 and/or 1') are pressure-coupled in said holes (6 and/or 8), of studs (7 and/or 9) through their external surfaces (5) with the inclined part of the annular indentation (10) oriented by way of introduction and elastic peripheral deformation stress raiser towards said holes and with the expansion of said indentation against the walls of the same and the respective ends oriented in opposition to the extraction direction.

12. The fasteners for friezes of railings, gratings and the like according to claims 1-9, characterized in that standards (4) are pressure-coupled into the central holes (2 and/or 3) of the annular bodies (1 and/or 1') engaged in holes (6 and/or 8) of studs (7 and/or 9), with the inclined part of the annular indentations (10') oriented by way of introduction and elastic peripheral deformation stress raiser towards said standards and the respective ends oriented in opposition to the extraction direction.
